(19) Europäisches Patentamt / European Patent Office / Office européen des brevets

(11) **EP 3 848 682 B1**

(12) **EUROPEAN PATENT SPECIFICATION**

(45) Date of publication and mention of the grant of the patent:
**18.06.2025 Bulletin 2025/25**

(21) Application number: **19856886.7**

(22) Date of filing: **09.07.2019**

(51) International Patent Classification (IPC):
**G01J 3/46** *(2006.01)*　　　**G01J 3/02** *(2006.01)*
**G01J 3/50** *(2006.01)*

(52) Cooperative Patent Classification (CPC):
**G01J 3/504; G01J 3/0264**

(86) International application number:
**PCT/JP2019/027102**

(87) International publication number:
**WO 2020/049860 (12.03.2020 Gazette 2020/11)**

(54) **COATING-COLOR-EVALUATION-IMAGE GENERATION METHOD AND GENERATION PROGRAM AND COATING-COLOR-EVALUATION-IMAGE GENERATION DEVICE**

VERFAHREN UND PROGRAMM ZUR ERZEUGUNG EINES SCHICHTFARBAUSWERTUNGSBILDES UND VORRICHTUNG ZUR ERZEUGUNG EINES SCHICHTFARBAUSWERTUNGSBILDES

PROCÉDÉ DE GÉNÉRATION D'IMAGE D'ÉVALUATION DE COULEUR DE REVÊTEMENT ET PROGRAMME DE GÉNÉRATION ET DISPOSITIF DE GÉNÉRATION D'IMAGE D'ÉVALUATION DE COULEUR DE REVÊTEMENT

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **04.09.2018 JP 2018165312**

(43) Date of publication of application:
**14.07.2021 Bulletin 2021/28**

(73) Proprietor: **Kansai Paint Co., Ltd**
**Amagasaki-shi, Hyogo 661-8555 (JP)**

(72) Inventors:
• **MASUDA Yutaka**
**Hiratsuka-shi, Kanagawa 254-8562 (JP)**
• **ONO Ikumi**
**Hiratsuka-shi, Kanagawa 254-8562 (JP)**

(74) Representative: **Stöckeler, Ferdinand et al**
**Schoppe, Zimmermann, Stöckeler**
**Zinkler, Schenk & Partner mbB**
**Patentanwälte**
**Radlkoferstrasse 2**
**81373 München (DE)**

(56) References cited:
| | |
|---|---|
| **EP-A1- 0 932 038** | **WO-A1-2006/064011** |
| **JP-A- 2000 216 977** | **JP-A- 2005 157 771** |
| **JP-A- 2005 157 771** | **JP-A- 2016 161 297** |
| **JP-A- 2016 161 297** | **JP-A- H1 010 045** |
| **JP-A- H1 010 045** | **US-A1- 2018 047 127** |

**Description**

[Technical Field]

The present invention relates to a coating-color-evaluation-image generation method, and a coating-color-evaluation-image generation program. Priority is claimed on Japanese Patent Application No. 2018-165312 filed on September 4, 2018, whose content is incorporated herein by reference.

[Background Art]

It is difficult to perform a coating color evaluation for a coating color of a paint coated on an industrial product such as an automobile, particularly a metallic coating color whose appearance changes depending on an observation angle before the coating is actually performed with respect to the actual industrial product.

In a coating color evaluation panel disclosed in Patent Document 1, a main surface and a secondary surface of the color evaluation panel have different curvatures. Accordingly, it is possible to perform the coating color evaluation more accurately including the evaluation with respect to the highlights and the shade of the metallic coating color by coating the coating color evaluation panel in the metallic color.

It is possible to visually perform the coating color evaluation of the industrial product coated in the metallic color by a computer simulation if the three-dimensional CAD shape data of the industrial product is available. However, in many cases such as when evaluating the design of the industrial product at a planning stage of the industrial product, the three-dimensional CAD shape data of the industrial product cannot be obtained.

On the other hand, with regard to the metallic coating color whose appearance changes depending on the observation angle, it is known to irradiate the flat panel applied with the metallic color coating with light from a specific angle so as to calculate the spectral reflectance at various acceptance angles from the spectral reflectance obtained by receiving the reflected light at various angles.

According to a method for determining the optical characteristic of a metallic coating film disclosed in Patent Document 2, it is possible to predict the spectral reflectance at an arbitrary angle in a wide range from the highlight to the shade of the metallic coating color.

An apparatus for determining a metallic coating color as disclosed in Patent Document 3 is configured to generate a color simulation image (hereinafter described as a "CS image") which is a computer simulation image that can be used as a digital palette on the basis of the spectral reflectance obtained using the method disclosed in Patent Document 2. The CS image includes a computer simulation image of the metallic coating color observed from a wide angle range from the highlight to the shade. By using the CS image, for example, it is possible for a designer to perform the coating color evaluation of the metallic coating color according to the observation angle at the planning stage.

EP 0 932 038 A1 teaches a method for classifying and arranging metallic paint colors by determining the representative color of any metallic paint color, calculating the hue-tone value of said representative color, generating coating color computer graphics indicating optical properties of said metallic paint color in a prescribed range of angles of observation, and preparing a coating color map by arranging said coating color computer graphics over the hue-tone value of said representative color in a hue-tone chart on the monitor screen of a computer system.

WO 2006/064011 A1 teaches a method for analyzing the visual coarseness of a paint film comprising, wherein a sample of the paint film is presented to a cavity via the sample opening, the cavity is illuminated, an imaging device is activated to record an image of the sample, and the recorded image data is communicated to a computer programmed with image analysis software to analyze the recorded image. The optical axis of the imaging device is set at an angle of 3 to 12 degrees with the centre normal of the sample opening.

[Citation List]

[Patent Documents]

[Patent Document 1]
Japanese Patent (Granted) Publication No. 6068238
[Patent Document 2]
Japanese Patent (Granted) Publication No. 3671088
[Patent Document 3]
Japanese Patent (Granted) Publication No. 4790164

[Summary of Invention]

[Technical Problem]

However, the coating surface of the actual industrial product has a different three-dimensional shape for each product, and a change of the shadow on the coating surface is different for each industrial product. Since the CS image is formed without taking the change in shadow into consideration, it is difficult to predict the overall impression when the metallic surface is coated on the coating surface of the actual industrial product from the CS image.

Taking the above circumstances into consideration, an object of the present invention is to provide a method and a program for generating a coating-color-evaluation image so as to make it easy to predict the overall impression in a case in which the coating surface of the industrial product is coated in the metallic coating color.

[Solution to Problem]

In order to solve the problems described above, the present invention proposes the following means.

According to a first aspect of the present invention, a method of generating a coating-color-evaluation image is provided.

According to a second aspect of the present invention, in the coating-color-evaluation-image generation method according to the first aspect, in the mapping step, the highest gray level may be associated with the smallest angle in the observation angle range, and the lowest gray level may be associated with the largest angle in the observation angle range.

According to a third aspect of the present invention, in the coating-color-evaluation-image generation method according to the first aspect or the second aspect, the coating-color-evaluation image generating step may include generating the coating-color-evaluation image in a two-dimensional form, and the coating-color-evaluation image may be arranged in a raster scan sequence in which the colorimetric values are in a sequence of the order of magnitude of angles in the observation angle range.

According to a fourth aspect of the present invention, a coating-color-evaluation-image generation program according to claim 4 is provided.

According to a seventh aspect of the present invention, a coating-color-evaluation-image generation device with the features of claim 5 is provided.

According to an eighth aspect of the present invention, in the coating-color-evaluation-image generation device according to the seventh aspect, the mapping unit may be configured to associate the highest gray level to the smallest angle in the observation angle range, and associate the lowest gray level to the largest angle in the observation angle range.

According to a ninth aspect of the present invention, in the coating-color-evaluation-image generation device according to the seventh aspect or the eighth aspect, the coating-color-evaluation image generating unit maybe configured to generate the coating-color-evaluation image in a two-dimensional form, and arrange the coating-color-evaluation image in a raster scan sequence in which the colorimetric values are in a sequence of the order of magnitude of angles in the observation angle range.

[Advantageous Effects of Invention]

According to the coating-color-evaluation-image generation method, the coating-color-evaluation-image generation program, and the coating-color-evaluation-image generation device disclosed in the present invention, it is possible to generate a coating-color-evaluation image so as to make it easy to predict the overall impression in a case in which the coating surface of the industrial product is coated in the metallic coating color.

[Brief Description of Drawings]

Fig. 1 shows a configuration diagram of a coating-color-evaluation-image generation device configured to execute a coating-color-evaluation-image generation program according to an embodiment of the present invention.

Fig. 2 shows a configuration diagram of a computer of the coating-color-evaluation-image generation device according to the embodiment of the present invention.

Fig. 3 shows a functional block diagram of the computer of the coating-color-evaluation-image generation device according to the embodiment of the present invention.

Fig. 4 shows a two-dimensional image of a car (sedan car) as an evaluation target of a coating-color-evaluation-image generation method according to the embodiment of the present invention.

Fig. 5 shows a coating surface image generated from FIG. 4.

Fig. 6 shows a histogram of Fig. 5.

Fig. 7 shows a two-dimensional image of a car (SUV car) as an evaluation target of the coating-color-evaluation-image generation method according to the embodiment of the present invention.

Fig. 8 shows a coating surface image generated from FIG. 7.

Fig. 9 shows a histogram of FIG. 8.

Fig. 10 shows a measurement example for a spectral reflectance of a metallic coating color according to the coating-color-evaluation-image generation method according to the embodiment of the present invention.

Fig. 11 shows the generation of the coating-color-evaluation image in a coating-color-evaluation image generating step of the coating-color-evaluation-image generation method according to the embodiment of the present invention.

Fig. 12 shows a coating-color-evaluation image of a sedan car in a case of coating a color Toyota 1D2 Gray M (silver metallic) in metallic.

Fig. 13 shows a coating-color-evaluation image of a sedan car in a case of coating a color Toyota 4S3 Pale Orange Mica M (beige metallic) in metallic.

Fig. 14 shows a coating-color-evaluation image of an SUV car in a case of coating a Toyota 1D2 Gray M (silver metallic) in metallic.

Fig. 15 shows a coating-color-evaluation image of an SUV car in a case of coating a Toyota 4S3 Pale Orange Mica M (beige metallic) in metallic.

[Description of Embodiments]

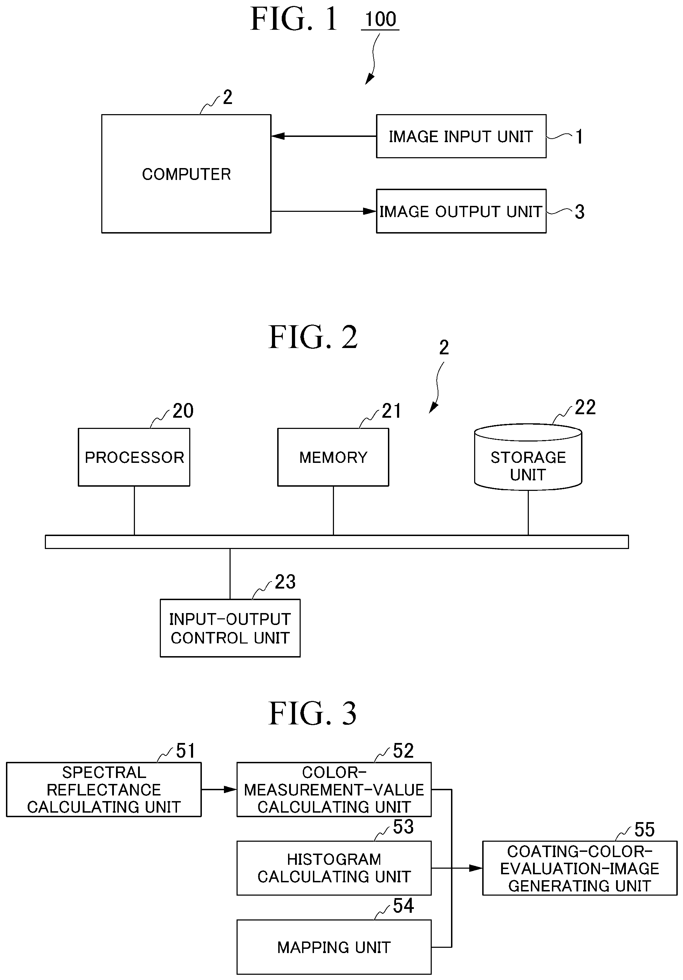

An embodiment of the present invention will be described with reference to Figs. 1 to 15.

A coating-color-evaluation-image generation method according to the present embodiment is a method for generating a coating-color-evaluation image from a coating surface image showing a coating surface applied to an industrial product and a model thereof, and for example, the method is realized by a coating-color-evaluation-image generation program which is executed by a program executable computer.

Fig. 1 is a configuration diagram of a coating-color-evaluation-image generation device 100 configured to execute a coating-color-evaluation-image generation program. The coating-color-evaluation-image generation device 100 has an image input unit 1, a program executable computer 2, and an image output unit 3 such as an LCD monitor and the like.

Fig. 2 is a configuration diagram of the computer 2.

The computer 2 is a program executable processing device which has a processor 20, a program readable memory 21, a storage unit 22 capable of storing the program and data, and an input-output control unit 23. The function of the computer 2 is realized by the processor 20 executing the program supplied to the computer 2.

Fig. 3 is a functional block diagram of the computer 2 when the computer 2 executes the coating-color-evaluation-image generation program. The functional blocks include a spectral reflectance calculating unit 51, a colorimetric value calculating unit 52, a histogram generating unit 53, a mapping unit 54, and a coating-color-evaluation image generating unit 55.

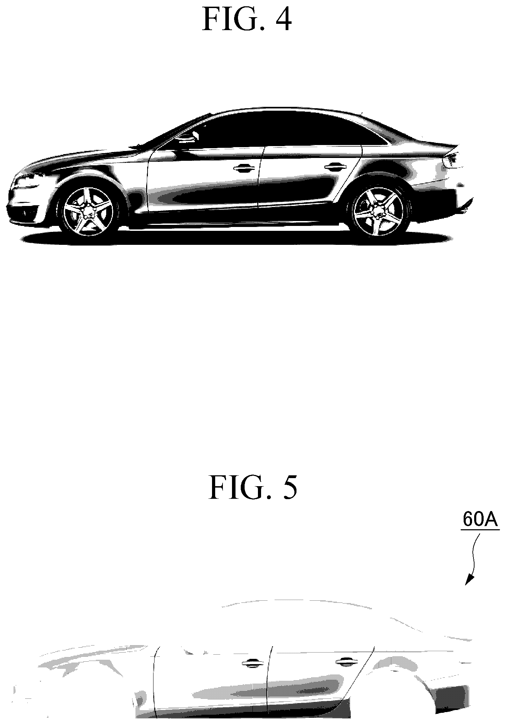

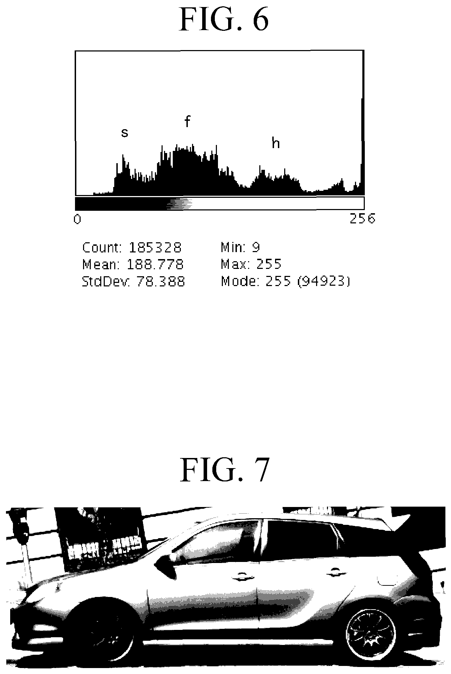

Fig. 4 and Fig. 7 are two-dimensional images (photographs, illustrations and the like) of an automobile as the target to which the coating-color-evaluation-image generation method according to the present embodiment is applied. In the following description, the image of the sedan car as shown in Fig. 4 is described as a "sedan car image", and the image of the SUV car as shown in Fig. 7 is described as an "SUV car image". The sedan car image and the SUV car image are input to the computer 2 by using the image input unit 1 such as a scanner and the like.

The three-dimensional shape of the coating surface of the sedan car shown in Fig. 4 is different from the three-dimensional shape of the coating surface of the SUV car shown in Fig. 7. Even if the same metallic coating color is applied to the coating surface, the change of shadow on the coating surface is different for the sedan car and the SUV car. According to the coating-color-evaluation-image generation method of the present embodiment, it is possible to predict the overall impression of the coating surface in a case in which the coating surface of the sedan car shown in Fig. 4 and the coating surface of the SUV car shown in Fig. 7 are coated in the metallic color, according to the change of shadow in the coating surface image (two-dimensional image) showing the coating surface applied to the industrial product and the model thereof.

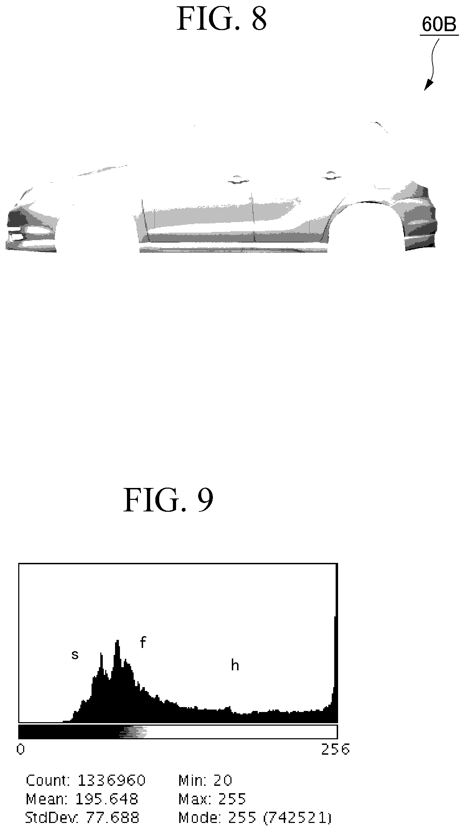

Prior image processing is applied to the sedan car image shown in Fig. 4 and the SUV car image shown in Fig. 7 which are input to the computer 2. An image of the actual coating surface only is cut out from each image to generate the "coating surface image". Fig. 5 shows a coating surface image 60A generated from the sedan car image. Fig. 8 shows a coating surface image 60B generated from the SUV car image.

The coating surface image 60A and the coating surface image 60B according to the present embodiment are images generated by transforming the sedan car image and the SUV car image that are color images into 8-bit greyscale images. The coating surface image is not limited to the greyscale image. The coating surface image only has to be an image configured by a parameter (hereinafter described as "gray level") equivalent to a luminance of an image that is represented by an arbitrary bit number such as a Y component of a YUV signal, a G component of an RGB signal and the like.

During the generation of the coating surface image, it is preferable that part where the shadow of the coating surface is not changed according to the three-dimensional shape of the coating surface itself, such as the part where the shade of a side mirror is formed, is not included in the coating-surface image. It is because that change of the shadow on the coating surface can be accurately predicted according to the three-dimensional shape of the coating surface in a case in which the coating surface is coated in the metallic color.

Next, a coating-color-evaluation-image generation method according to the present embodiment will be described.

The coating-color-evaluation-image generation method according to the present embodiment has a spectral reflectance calculating step S1, a colorimetric value calculating step S2, a histogram generating step S3, a mapping step S4, and a coating-color-evaluation image generating step S5.

The spectral reflectance calculating unit 51 calculates a spectral reflectance of the metallic coating color at each predetermined angle in an observation angle range (from zero degrees to 75 degrees) according to the spectral reflectance of the metallic coating color which is measured at each of a plurality of light receiving angles using a method of determining optical characteristic of the metallic coating film disclosed in Patent Document 2 as the prior art citation (spectral reflectance calculating step S1).

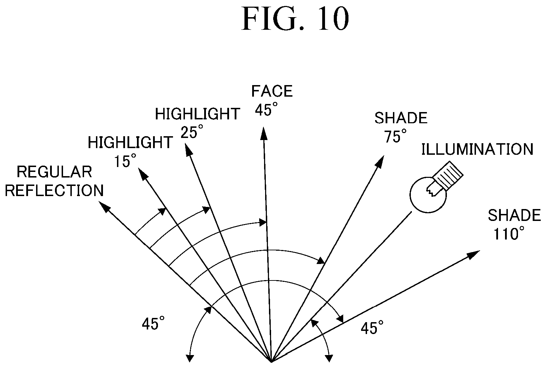

Fig. 10 shows a measurement example of the spectral reflectance of the metallic coating color.

For example, as shown in Fig. 10, the spectral reflectance of the metallic coating color is measured at an incident angle 45 degrees and light receiving angles (five angles) including a highlight angle at 15 degrees, a highlight angle at 25 degrees, a face angle at 45 degrees, a shade angle at 75 degrees, and a shade angle at 110 degrees. The metallic coating color, for example, is selected from an auto color chart (by KANSAI PAINT CO., LTD.) as a sample book of automobile maintenance paint. The spectral reflectance of the selected metallic color is measured by using the Five-Angle Spectrophotometer MA-68II manufactured by X-Rite, Inc.

Next, the spectral reflectance calculating unit 51 calculates the spectral reflectance of the metallic coating color by a predetermined angle in the observation angle range (from 0 degree to 75 degrees) according to the spectral reflectance measured at the five degrees. The spectral reflectance calculating unit 51 may derive an equation for calculating the spectral reflectance of the metallic coating color at each arbitrary angle. The predetermined angle according to the present embodiment is approximately 0.3 degrees (calculated by "the observation angle range/gray level=75 degrees/256= approximately 0.3 degrees"). The calculated spectral reflectance together with the corresponding predetermined angle are recorded in the memory 21 of the computer 2.

The colorimetric value calculating unit 52 calculates the colorimetric value (metallic color) by the predetermined angle in the observation angle range (from 0 degree to 75 degrees) according to the spectral reflectance calculated by the spectral reflectance calculating unit 51 using the method of determining the optical characteristic of the metallic coating film disclosed in Patent document 2 as the prior art citation (colorimetric value calculating step S2). The colorimetric value calculating unit 52 may derive an equation for calculating the colorimetric value at each arbitrary angle. The calculated colorimetric value together with the corresponding predetermined angle are recorded in the memory 21 of the computer 2.

The histogram generating unit 53 measures a number of pixels at each gray level of the coating surface image that is preliminarily prepared and obtains a ratio of the number of pixels at each gray level (histogram generating step S3).

Fig. 6 is a histogram of the number of pixels at each gray level of the coating surface image 60A of the sedan car. Fig. 9 is a histogram of the number of pixels at each gray level of the coating surface image 60B of the SUV car. The coating surface image 60A and the coating surface image 60B according to the present embodiment are 8-bit greyscale images such that the gray level thereof becomes 256 steps shown as [0-255].

In Fig. 6 and Fig. 9, an area designated to [h] shows a highlight area (corresponding to observation angle at 15 degrees and 25 degrees), an area designated to [f] shows a face area (corresponding to observation angle at 45 degrees), and an area designated to [s] shows a shade area (corresponding to observation angle at 75 degrees and 110 degrees).

The number of pixels at each gray level (a number of measurement pixels) is known according to the histogram of the number of pixels at each gray level of the coating surface image 60A and the coating surface image 60B. The histogram generating unit 53 creates "a number of correction pixels" by removing the number of pixels corresponding to the maximum gray level and the minimum gray level (for example, nearly black [0-5] and nearly white [254-255]) from the number of measurement pixels. There is a high possibility that the pixels whose gray level is near the maximum level or the minimum level does not show the change of shadow on the coating surface generated according to the three-dimensional shape of the coating surface itself such that it is desirable to remove the pixels during the generating process of the coating-color-evaluation image. For example, as shown in Fig. 6 and Fig. 9, in the area whose gray level shown by the horizontal axis is near the maximum level, the number of pixels becomes extremely large. It is possible to create the histogram in which the change of shadow in the coating surface is more accurately extracted by removing the pixels during the generating process of the coating-color-evaluation image. Furthermore, it is possible to create the histogram in which the characteristic in an area from the area s (shade) to the area h (highlight) is more accurately extracted by removing the pixels in the vicinity of the area whose gray level shown by the horizontal axis is near the minimum level.

Next, the histogram generating unit 53 calculates the ratio of the number of correction pixels at each gray level [0-255] with respect to a total number of correction pixels. Table 1 shows the number of the measurement pixels, the number of correction pixels, and the ratio calculated according to the number of correction pixels in the coating surface image of the sedan car shown in Fig. 5. The calculated ratio and the corresponding gray level are recorded in the memory 21 of the computer 2.

[Table 1]

Table 1

| GRAY LEVEL | MEASUREMENT PIXEL NUMBER | CORRECTION PIXEL NUMBER | RATIO |
|---|---|---|---|
| 0 | 0 | 0 | 0 |
| 1 | 0 | 0 | 0 |
| 2 | 0 | 0 | 0 |
| 3 | 0 | 0 | 0 |
| 4 | 0 | 0 | 0 |
| 5 | 0 | 0 | 0 |
| 6 | 0 | 0 | 0 |
| 7 | 0 | 0 | 0 |
| 8 | 0 | 0 | 0 |
| 9 | 1 | 1 | 1.1E-05 |
| 10 | 3 | 3 | 3.4E-05 |
| 11 | 0 | 0 | 0 |
| 12 | 5 | 5 | 5.6E-05 |
| 13 | 12 | 12 | 0.00014 |
| 14 | 8 | 8 | 9E-05 |
| 15 | 43 | 43 | 0.00049 |
| 180 | 329 | 329 | 0.00371 |
| 181 | 336 | 336 | 0.00379 |
| 182 | 362 | 362 | 0.00408 |
| 183 | 308 | 308 | 0.00347 |
| 184 | 359 | 359 | 0.00405 |
| 185 | 491 | 491 | 0.00554 |
| 186 | 386 | 386 | 0.00435 |
| 187 | 355 | 355 | 0.00401 |
| 188 | 378 | 378 | 0.00426 |
| 189 | 363 | 363 | 0.0041 |
| 245 | 71 | 71 | 0.0008 |
| 246 | 92 | 92 | 0.00104 |
| 247 | 185 | 185 | 0.00209 |
| 248 | 245 | 245 | 0.00276 |

(continued)

| GRAY LEVEL | MEASUREMENT PIXEL NUMBER | CORRECTION PIXEL NUMBER | RATIO |
|---|---|---|---|
| 249 | 180 | 180 | 0.00203 |
| 250 | 131 | 131 | 0.00148 |
| 251 | 154 | 154 | 0.00174 |
| 252 | 218 | 218 | 0.00246 |
| 253 | 574 | 574 | 0.00648 |
| 254 | 1769 | 0 | 0 |
| 255 | 94923 | 0 | 0 |
| TOTAL | | 88636 | 1 |

The mapping unit 54 associates the observation angle at each predetermined angle in the observation angle range (from 0 degree to 75 degrees) with each gray level in the coating surface image 60A and the coating surface image 60B (mapping step S4) . According to the present embodiment, the gray level 255 (white) is associated with the highlight angle zero degrees, and the gray level 0 (black) is associated with the shade angle 75 degrees. The smallest angle in the observation angle range is associated with the highest gray level, the observation angle stepwise increasing is associated with the gray level stepwise decreasing, and the largest angle in the observation angle range is associated with the lowest gray level.

Table 2 shows the observation angles corresponding to the gray levels [0-255] calculated by a linear interpolation.

[Table 2]

Table 2

| OBSERVATION ANGLE | GRAY LEVEL |
|---|---|
| 75.0 | 0 |
| 74.7 | 1 |
| 74.4 | 2 |
| 74.1 | 3 |
| 73.8 | 4 |
| 73.5 | 5 |
| 73.2 | 6 |
| 72.9 | 7 |
| 72.6 | 8 |
| 72.4 | 9 |
| 72.1 | 10 |
| 71.8 | 11 |
| 71.5 | 12 |
| 71.2 | 13 |
| 70.9 | 14 |
| 70.6 | 15 |
| 22.1 | 180 |
| 21.8 | 181 |

(continued)

| OBSERVATION ANGLE | GRAY LEVEL |
|---|---|
| 21.5 | 182 |
| 21.2 | 183 |
| 20.9 | 184 |
| 20.6 | 185 |
| 20.3 | 186 |
| 20.0 | 187 |
| 19.7 | 188 |
| 19.4 | 189 |
| 2.9 | 245 |
| 2.6 | 246 |
| 2.4 | 247 |
| 2.1 | 248 |
| 1.8 | 249 |
| 1.5 | 250 |
| 1.2 | 251 |
| 0.9 | 252 |
| 0.6 | 253 |
| 0.3 | 254 |
| 0.0 | 255 |

The coating-color-evaluation-image generating unit 55 generates a coating-color-evaluation image 70 which is colored by arranging the colorimetric values (metallic color) calculated at each predetermined angle in the observation angle range (from 0 degree to 75 degrees) in a sequence according to the order of magnitude of the observation angles and by a quantity corresponding to the ratio of the number of pixels for each gray level associated with the observation angle (coating-color-evaluation-image generating step S5).

According to the present embodiment, the coating-color-evaluation image 70 is a two-dimensional image having a width of 128 pixels and a height of 200 pixels, and the total number of pixels is 25600 pixels. The number of pixels at each gray level (hereinafter described as "CSX number of pixels") is calculated by multiplying the 25600 pixels by the ratio shown in Table 1. Table 3 shows the calculated CSX number of pixels. In Table 3, the numbers of measurement pixels, the number of correction pixels, the ratios calculated according to the number of correction pixels, and the observation angles corresponding to the gray levels [0-255] are also shown.

[Table 3]

Table 3

| OBSERVATION ANGLE | GRAY LEVEL | MEASUREMENT PIXEL NUMBER | CORRECTION PIXEL NUMBER | RATIO | CSX PIXEL NUMBER |
|---|---|---|---|---|---|
| 75.0 | 0 | 0 | 0 | 0 | 0 |
| 74.7 | 1 | 0 | 0 | 0 | 0 |
| 74.4 | 2 | 0 | 0 | 0 | 0 |
| 74.1 | 3 | 0 | 0 | 0 | 0 |
| 73.8 | 4 | 0 | 0 | 0 | 0 |

(continued)

| OBSERVATION ANGLE | GRAY LEVEL | MEASUREMENT PIXEL NUMBER | CORRECTION PIXEL NUMBER | RATIO | CSX PIXEL NUMBER |
|---|---|---|---|---|---|
| 73.5 | 5 | 0 | 0 | 0 | 0 |
| 73.2 | 6 | 0 | 0 | 0 | 0 |
| 72.9 | 7 | 0 | 0 | 0 | 0 |
| 72.6 | 8 | 0 | 0 | 0 | 0 |
| 72.4 | 9 | 1 | 1 | 1.1E-05 | 0 |
| 72.1 | 10 | 3 | 3 | 3.4E-05 | 1 |
| 71.8 | 11 | 0 | 0 | 0 | 0 |
| 71.5 | 12 | 5 | 5 | 5.6E-05 | 1 |
| 71.2 | 13 | 12 | 12 | 0.00014 | 3 |
| 70.9 | 14 | 8 | 8 | 9E-05 | 2 |
| 70.6 | 15 | 43 | 43 | 0.00049 | 12 |
| 22.1 | 180 | 329 | 329 | 0.00371 | 95 |
| 21.8 | 181 | 336 | 336 | 0.00379 | 97 |
| 21.5 | 182 | 362 | 362 | 0.00408 | 105 |
| 21.2 | 183 | 308 | 308 | 0.00347 | 89 |
| 20.9 | 184 | 359 | 359 | 0.00405 | 104 |
| 20.6 | 185 | 491 | 491 | 0.00554 | 142 |
| 20.3 | 186 | 386 | 386 | 0.00435 | 111 |
| 20.0 | 187 | 355 | 355 | 0.00401 | 103 |
| 19.7 | 188 | 378 | 378 | 0.00426 | 109 |
| 19.4 | 189 | 363 | 363 | 0.0041 | 105 |
| 2.9 | 245 | 71 | 71 | 0.0008 | 21 |
| 2.6 | 246 | 92 | 92 | 0.00104 | 27 |
| 2.4 | 247 | 185 | 185 | 0.00209 | 53 |
| 2.1 | 248 | 245 | 245 | 0.00276 | 71 |
| 1.8 | 249 | 180 | 180 | 0.00203 | 52 |
| 1.5 | 250 | 131 | 131 | 0.00148 | 38 |
| 1.2 | 251 | 154 | 154 | 0.00174 | 44 |
| 0.9 | 252 | 218 | 218 | 0.00246 | 63 |
| 0.6 | 253 | 574 | 574 | 0.00648 | 166 |
| 0.3 | 254 | 1769 | 0 | 0 | 0 |
| 0.0 | 255 | 94923 | 0 | 0 | 0 |
| TOTAL | | | 88636 | 1 | 25600 |

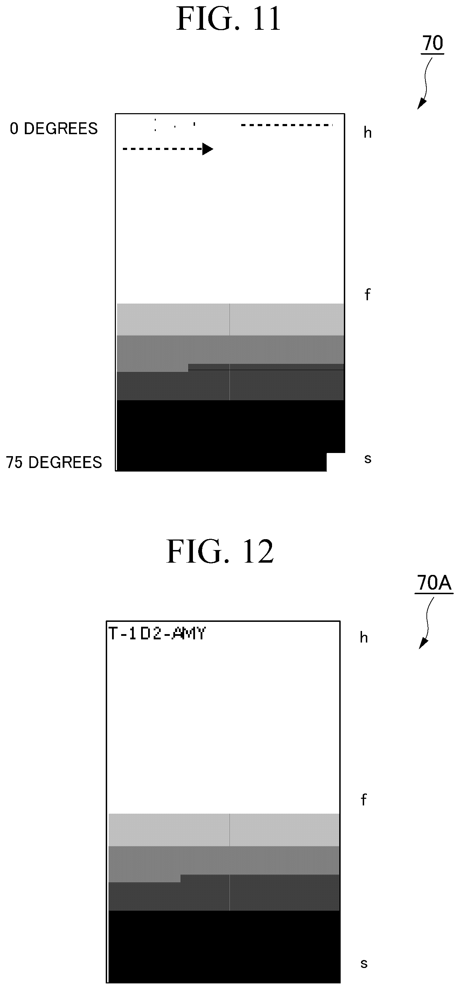

Fig. 11 is a view showing the generation of the coating-color-evaluation image 70 during the coating-color-evaluation image generating step S5.

The coating-color-evaluation-image generating unit 55 arranges the calculated colorimetric values calculated at each predetermined angle in the coating-color-evaluation image 70 in the sequence according to the order of magnitude of the observation angles. According to the present embodiment, the colorimetric value corresponding to the observation angle 0 degree is arranged at the upper left pixel of the two-dimensional image. The colorimetric value corresponding to the observation angle 75 degrees is arranged at the lower right pixel of the two-dimensional image. The observation angles becomes larger from the upper left side toward the lower right side of the two-dimensional image. The coating-color-evaluation-image generating unit 55 may arrange the colorimetric values such that the corresponding observation angles increases from the lower right side toward the upper left side of the two-dimensional image. In other words, in the two-dimensional coating-color-evaluation image 70 generated by the coating-color-evaluation-image generating unit 55, the colorimetric values only have to be arranged in the order of the magnitude of the observation angles in the observation angle range following the raster scan sequence (scan sequence).

When the colorimetric values calculated at each predetermined angle are arranged in the coating-color-evaluation image 70 in the order of the magnitude of the observation angle, the colorimetric values are arranged by a quantity (number of pixels) in correspondence to the ratio of the number of pixels at each gray level corresponding to the observation angle. The colorimetric value of each predetermined angle in the observation angle range (from 0 degree to 75 degrees) is not evenly arranged in the coating-color-evaluation image 70 following the order of the magnitude of the observation angle in the observation angle range.

As shown in Fig. 11, the colorimetric value of the angle 0.6 degree is only arranged to the 166 pixels from the upper left corner of the two-dimensional image. The colorimetric values of the angle 0.0 degree and the angle 0.3 degree are not arranged in the coating-color-evaluation image 70 since the ratios of the number of pixels of the corresponding gray level 255 and 254 are zero, respectively.

Next, the colorimetric value of the angle 0.9 degree is only arranged to the 63 pixels. Such step is repeated up to the angle 75 degrees to arrange the colorimetric values to all of the 25600 pixels such that the two-dimensional coating-color-evaluation image 70 is completed. The completed two-dimensional coating-color-evaluation image 70 is displayed on the image output unit 3 of the computer 2.

Fig. 12 shows a coating-color-evaluation image 70A of the sedan car in a case of applying the metallic color to a color Toyota 1D2 Gray M (silver metallic).

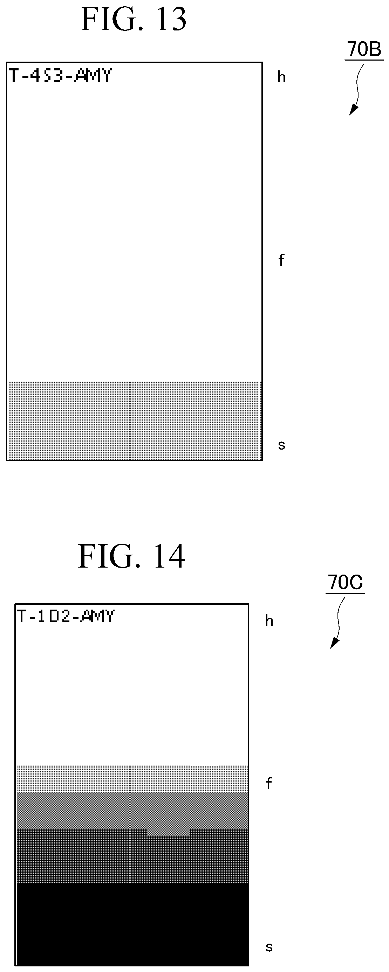

Fig. 13 shows a coating-color-evaluation image 70B of the sedan car in a case of applying the metallic color to a color Toyota 4S3 Pale Orange Mica M (beige metallic).

An area h (highlight) in the histogram as shown in Fig. 6 is considered to be equivalent to an area where a surface due to a press line of the automobile body is shining. In this area, the number of pixels is large, and a distribution of the number of pixels in the area and a distribution of the number of pixels in the area f (face) are discontinuous. In the coating-color-evaluation image 70A of the sedan car as shown in Fig. 12, the area h (highlight) becomes a belt-shaped image. A similar tendency is confirmed in the coating-color-evaluation image 70B of the sedan car shown in FIG. 13. The coating-color-evaluation image 70A and the coating-color-evaluation image 70B suitably reproduce the shadow appearance of the histogram.

The belt-shaped image becomes more conspicuous as the coating color has a stronger metal feeling, in other words, the belt-shaped image becomes more conspicuous as the flip-flop value (hereinafter described as "FF value") is larger. Here, the flip-flop value is a value calculated from a brightness Y value in an XYZ colorimetric system (described as "Y15") that is calculated according to the spectral reflectance at the light receiving angle 15 degrees and a value calculated from a brightness Y value in an XYZ colorimetric system (described as "Y45") that is calculated according to the spectral reflectance at the light receiving angle 45 degrees by using the equation (1) shown below. For example, the FF value of the color Toyota 1D2 grey M is 1.621.

$$\text{FF VALUE} = [2*(Y15-Y45)]/(Y15+Y45) \cdots (\text{Equation 1})$$

In an actual case of observing an automobile, it is said that an impression color of the whole automobile when viewing the car in a short period from 1 to 2 second (defined as "view at a glance") is determined by an intensity of the highlight color, the neutral color and the shade color, and areas thereof respectively. Accordingly, it can be said that the coating-color-evaluation image suitably reproduces the impression color with a glancing view.

Fig. 14 shows a coating-color-evaluation image 70C of the SUV car in a case of coating the color Toyota 1D2 grey M (silver metallic) in metallic.

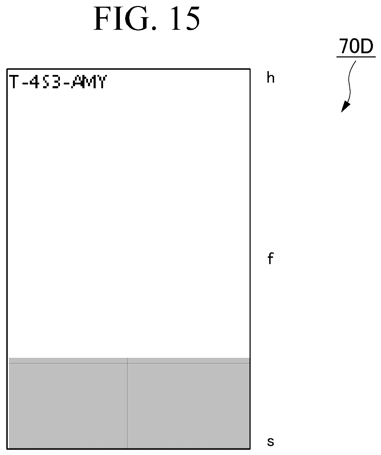

Fig. 15 shows a coating-color-evaluation image 70D of the SUV car in a case of coating the color Toyota 4S3 Pale Orange Mica M (beige metallic) in metallic.

In the coating-color-evaluation image 70C shown in Fig. 14 and the coating-color-evaluation image 70D shown in Fig. 15, the belt-shaped image shown in Fig. 12 and Fig. 13 cannot be observed in the area h (highlight). It is probably because that the number of images in the area h (highlight) of the histogram shown in Fig. 9 is small.

According to the coating-color-evaluation-image generating method and the generating program according to the present embodiment, in the coating-color-evaluation image, the colorimetric values (metallic color) at each predetermined angle in the observation angle range (from 0 degree to 75 degrees) are not arranged evenly in the order of the observation angles in the observation angle range. The coating-color-evaluation image is formed by taking the pixel ratio of the gray level corresponding to the observation angle into consideration.

In other words, when the pixels corresponding to the gray level at a certain observation angle A are included in the coating surface image in a large amount, the colorimetric value (metallic color) of the observation angle A are much arranged in the coating-color-evaluation image. On the other hand, when the pixels corresponding to the gray level at the certain observation angle A are not much included in the coating surface image, the colorimetric value (metallic color) of the observation angle A are not much arranged in the coating-color-evaluation image.

Accordingly, it is possible to predict the whole impression when the coating surface is coated in metallic by the coating-color-evaluation image generated from the change of the shadow in the coating surface of the coating surface image without using the three-dimensional CAD shape data.

The coating-color-evaluation-image generation program is recorded in a computer-readable recording medium. The program recorded in the recording medium is read and executed by a computer system. Here, the "computer system" refers to a device including an OS and hardware such as peripheral devices. The "computer-readable recording medium" refers to a portable medium such as a flexible disk, a magneto-optical disk, a ROM, a CD-ROM, or a storage device such as a hard disk mounted in a computer system. Further, the "computer-readable recording medium" may include a medium that dynamically holds a program for a short time, for example, a communication line when the program is transmitted via a network such as the Internet or a communication circuit line such as a telephone line. The program may be provided to realize part of the functions described above. Furthermore, the program may be provided to realize the above-described functions by combing with program that is already record in the computer system. The program may be realized by using a programmable logic device such as an FPGA (Field Programmable Gate Array).

Hereinbefore, an embodiment of the present invention has been described above. However, technical scope of the present invention is not limited to the embodiment. Additions, omissions, substitutions and other changes in the structure are possible without departing from the present invention as defined by the claims. The above-described embodiment and configuration elements described in the following modification example may be suitably combined.

(Modification 1)

For example, in the above-described embodiment, the observation angle range is set to be from zero degrees to 75 degrees; however, the observation angle range is not limited thereto. The observation angle range may be, for example, from zero degrees to 90 degrees.

[INDUSTRIAL APPLICABILITY]

The present invention can be applied to an evaluation of an industrial product having a coating surface.

[Reference Signs List]

    100 coating-color-evaluation-image generation device
    1 image input unit
    2 computer
    20 processor
    21 memory
    22 storage unit
    23 input-output control unit
    3 image output unit
    60A, 60B coating surface images
    70, 70A, 70B, 70C, 70D coating-color-evaluation image
    S1 spectral reflectance calculating step
    S2 colorimetric value calculating step
    S3 histogram generating step
    S4 mapping step
    S5 coating-color-evaluation image generating step

**Claims**

1. A coating-color-evaluation-image generation method from a coating-surface image (60A, 60B) displaying a coating surface, comprising:

a spectral reflectance calculating step (S1) of calculating a spectral reflectance of a metallic coating color at each predetermined angle in an observation angle range from the spectral reflectance of the metallic coating color which is measured at a plurality of light receiving angles;

a colorimetric value calculating step (S2) of calculating a colorimetric value at each predetermined angle in the observation angle range according to the spectral reflectance;

a histogram generating step (S3) of measuring a number of pixels at each gray level of the coating-surface image (60A, 60B) and calculating a ratio of the number of pixels at each gray level with respect to a total number of correction pixels obtained by removing the number of pixels corresponding to the maximum and minimum gray levels from the total number of measurement pixels;

a mapping step (S4) of associating an observation angle (A) at each predetermined angle in the observation angle range with each gray level of the coating-surface image (60A, 60B); and

a coating-color-evaluation image generating step (S5) of generating the colored coating-color-evaluation image (70A, 70B, 70C, 70D) by arranging the colorimetric values calculated at each predetermined angle in the observation angle range in a sequence according to an order of magnitude of the observation angles (A) and by a quantity corresponding to the ratio of the number of pixels for each gray level associated with the observation angle (A) with respect to a total number of correction pixels obtained by removing the number of pixels corresponding to the maximum and minimum gray levels from the total number of measurement pixels.

2. The coating-color-evaluation-image generation method according to claim 1,
   wherein in the mapping step (S4),

   the highest gray level is associated with the smallest angle in the observation angle range, and
   the lowest gray level is associated with the largest angle in the observation angle range.

3. The coating-color-evaluation-image generation method according to claim 1,

   wherein the coating-color-evaluation image generating step (S5) includes generating the coating-color-evaluation image (70A, 70B, 70C, 70D) in a two-dimensional form, and
   wherein the coating-color-evaluation image (70A, 70B, 70C, 70D) is arranged in a raster scan sequence in which the colorimetric values are in a sequence of an order of magnitude of angles in the observation angle range.

4. A coating-color-evaluation-image generation program for causing a computer (2) to generate a coating-color-evaluation image (70A, 70B, 70C, 70D) from a coating-surface image (60A, 60B) displaying a coating surface by executing the method of one of claims 1 to 3.

5. A device (2) configured to generate a coating-color-evaluation image (70A, 70B, 70C, 70D) from a coating-surface image (60A, 60B) displaying a coating surface, comprising:

   a spectral reflectance calculating unit (51) configured to calculate a spectral reflectance of a metallic coating color at each predetermined angle in an observation angle range according to the spectral reflectance of the metallic coating color which is measured at a plurality of light receiving angles;
   a colorimetric value calculating unit (52) configured to calculate a colorimetric value at each predetermined angle in the observation angle range according to the spectral reflectance;
   a histogram generating unit (53) configured to measure a number of pixels at each gray level of the coating-surface image (60A, 60B) and calculate a ratio of the number of pixels at each gray level with respect to a total number of correction pixels obtained by removing the number of pixels corresponding to the maximum and minimum gray levels from the total number of measurement pixels;
   a mapping unit (54) configured to associate an observation angle (A) at each predetermined angle in the observation angle range with each gray level of the coating-surface image (60A, 60B); and
   a coating-color-evaluation image generating unit (55) configured to generate the colored coating-color-evaluation image (70A, 70B, 70C, 70D) by arranging the colorimetric values calculated at each predetermined angle in the observation angle range in a sequence according to an order of magnitude of the observation angles (A) and by a quantity corresponding to the ratio of the number of pixels for each gray level associated with the observation angle (A) with respect to a total number of correction pixels obtained by removing the number of pixels corresponding to the maximum and minimum gray levels from the total number of measurement pixels.

6. The device (2) configured to generate a coating-color-evaluation image (70A, 70B, 70C, 70D) according to claim 5, wherein the mapping unit (54) is configured to:

associate the highest gray level to the smallest angle in the observation angle range, and
associate the lowest gray level to the largest angle in the observation angle range.

7. The device (2) configured to generate a coating-color-evaluation image (70A, 70B, 70C, 70D) according to claim 5, wherein the coating-color-evaluation image generating unit (55) is configured to:

generate the coating-color-evaluation image (70A, 70B, 70C, 70D) in a two-dimensional form, and
arrange the coating-color-evaluation image (70A, 70B, 70C, 70D) in a raster scan sequence in which the colorimetric values are in a sequence of an order of magnitude of angles in the observation angle range.

**Patentansprüche**

1. Ein Beschichtungsfarbauswertungsbild-Erzeugungsverfahren aus einem Beschichtungsoberflächenbild (60A, 60B), das eine Beschichtungsoberfläche darstellt, wobei das Verfahren folgende Schritte aufweist:

einen Spektralreflexionsvermögenberechnungsschritt (S1) zum Berechnen eines Spektralreflexionsvermögens einer Metallbeschichtungsfarbe bei jedem vorbestimmten Winkel in einem Beobachtungswinkelbereich aus dem Spektralreflexionsvermögen der Metallbeschichtungsfarbe, das bei einer Mehrzahl von Lichtempfangswinkeln gemessen wird;
einen Kolorimetrischer-Wert-Berechnungsschritt (S2) zum Berechnen eines kolorimetrischen Werts bei jedem vorbestimmten Winkel in dem Beobachtungswinkelbereich gemäß dem Spektralreflexionsvermögen;
einen Histogrammerzeugungsschritt (S3) zum Messen einer Anzahl von Pixeln bei jeder Graustufe des Beschichtungsoberflächenbilds (60A, 60B) und Berechnen eines Verhältnisses der Anzahl von Pixeln bei jeder Graustufe in Bezug auf eine Gesamtzahl von Korrekturpixeln, die durch Entfernen der Anzahl von Pixeln entsprechend den maximalen und minimalen Graustufen von der Gesamtzahl von Messpixeln erhalten wird;
einen Zuweisungsschritt (S4) zum Zuordnen eines Beobachtungswinkels (A) bei jedem vorbestimmten Winkel in dem Beobachtungswinkelbereich zu jeder Graustufe des Beschichtungsoberflächenbilds (60A, 60B); und
einen Beschichtungsfarbauswertungsbild-Erzeugungsschritt (S5) zum Erzeugen des farbigen Beschichtungsfarbauswertungsbilds (70A, 70B, 70C, 70D) durch Anordnen der kolorimetrischen Werte, die bei jedem vorbestimmten Winkel in dem Beobachtungswinkelbereich berechnet werden, in einer Sequenz gemäß einer Größenordnung der Beobachtungswinkel (A) und nach einer Größe entsprechend dem Verhältnis der Anzahl von Pixeln für jede Graustufe, die dem Beobachtungswinkel (A) zugeordnet ist, in Bezug auf eine Gesamtzahl von Korrekturpixeln, die durch Entfernen der Anzahl von Pixeln entsprechend den maximalen und minimalen Graustufen von der Gesamtzahl der Messpixel erhalten wird.

2. Das Beschichtungsfarbauswertungsbild-Erzeugungsverfahren gemäß Anspruch 1, wobei in dem Zuordnungsschritt (S4)

die höchste Graustufe dem kleinsten Winkel in dem Beobachtungswinkelbereich zugeordnet wird, und
die niedrigste Graustufe dem größten Winkel in dem Beobachtungswinkelbereich zugeordnet wird.

3. Das Beschichtungsfarbauswertungsbild-Erzeugungsverfahren gemäß Anspruch 1,

wobei der Beschichtungsfarbauswertungsbild-Erzeugungsschritt (S5) ein Erzeugen des Beschichtungsfarbauswertungsbilds (70A, 70B, 70C, 70D) in zweidimensionaler Form umfasst, und
wobei das Beschichtungsfarbauswertungsbild (70A, 70B, 70C, 70D) in einer Rasterabtastsequenz angeordnet ist, in der die kolorimetrischen Werte in einer Sequenz einer Größenordnung von Winkeln in dem Beobachtungswinkelbereich vorliegen.

4. Ein Beschichtungsfarbauswertungsbild-Erzeugungsprogramm zum Bewirken, dass ein Computer (2) ein Beschichtungsfarbauswertungsbild (70A, 70B, 70C, 70D) aus einem Beschichtungsoberflächenbild (60A, 60B) erzeugt, das eine Beschichtungsoberfläche darstellt, durch Ausführen des Verfahrens gemäß einem der Ansprüche 1 bis 3.

5. Eine Vorrichtung (2), die dazu konfiguriert ist, ein Beschichtungsfarbauswertungsbild (70A, 70B, 70C, 70D) aus einem Beschichtungsoberflächenbild (60A, 60B), das eine Beschichtungsoberfläche darstellt, zu erzeugen, wobei die Vorrichtung folgende Merkmale aufweist:

eine Spektralreflexionsvermögensberechnungseinheit (51), die dazu konfiguriert ist, ein Spektralreflexionsvermögen einer Metallbeschichtungsfarbe bei jedem vorbestimmten Winkel in einem Beobachtungswinkelbereich gemäß dem Spektralreflexionsvermögen der Metallbeschichtungsfarbe zu berechnen, das bei einer Mehrzahl von Lichtempfangswinkeln gemessen wird;

eine Kolorimetrischer-Wert-Berechnungseinheit (52), die dazu konfiguriert ist, einen kolorimetrischen Wert bei jedem vorbestimmten Winkel in dem Beobachtungswinkelbereich gemäß dem Spektralreflexionsvermögen zu berechnen;

eine Histogrammerzeugungseinheit (53), die dazu konfiguriert ist, eine Anzahl von Pixeln bei jeder Graustufe des Beschichtungsoberflächenbilds (60A, 60B) zu messen und ein Verhältnis der Anzahl von Pixeln bei jeder Graustufe in Bezug auf eine Gesamtzahl von Korrekturpixeln, die durch Entfernen der Anzahl von Pixeln entsprechend den maximalen und minimalen Graustufen von der Gesamtzahl von Messpixeln erhalten wird, zu berechnen;

eine Zuweisungseinheit (54), die dazu konfiguriert ist, jeder Graustufe des Beschichtungsoberflächenbilds (60A, 60B) einen Beobachtungswinkel (A) bei jedem vorbestimmten Winkel in dem Beobachtungswinkelbereich zuzuordnen; und

eine Beschichtungsfarbauswertungsbild-Erzeugungseinheit (55), die dazu konfiguriert ist, das farbige Beschichtungsfarbauswertungsbild (70A, 70B, 70C, 70D) durch Anordnen der kolorimetrischen Werte, die bei jedem vorbestimmten Winkel in dem Beobachtungswinkelbereich berechnet werden, in einer Sequenz gemäß einer Größenordnung der Beobachtungswinkel (A) und nach einer Größe entsprechend dem Verhältnis der Anzahl von Pixeln für jede Graustufe, die dem Beobachtungswinkel (A) zugeordnet ist, in Bezug auf eine Gesamtzahl von Korrekturpixeln, die durch Entfernen der Anzahl von Pixeln entsprechend den maximalen und minimalen Graustufen von der Gesamtzahl von Messpixeln erhalten wird, zu erzeugen.

6. Die Vorrichtung (2), die dazu konfiguriert ist, ein Beschichtungsfarbauswertungsbild (70A, 70B, 70C, 70D) gemäß Anspruch 5 zu erzeugen,
wobei die Zuweisungseinheit (54) dazu konfiguriert ist:

die höchste Graustufe dem kleinsten Winkel in dem Beobachtungswinkelbereich zuzuordnen, und
die niedrigste Graustufe dem größten Winkel in dem Beobachtungswinkelbereich zuzuordnen.

7. Die Vorrichtung (2), die dazu konfiguriert ist, ein Beschichtungsfarbauswertungsbild (70A, 70B, 70D, 70D) gemäß Anspruch 5 zu erzeugen,
wobei die Beschichtungsfarbauswertungsbild-Erzeugungseinheit (55) dazu konfiguriert ist:

das Beschichtungsfarbauswertungsbild (70A, 70B, 70C, 70D) in zweidimensionaler Form zu erzeugen, und
das Beschichtungsfarbauswertungsbild (70A, 70B, 70C, 70D) in einer Rasterabtastsequenz anzuordnen, in der die kolorimetrischen Werte in einer Sequenz einer Größenordnung von Winkeln in dem Beobachtungswinkelbereich vorliegen.

**Revendications**

1. Procédé de génération d'image d'évaluation de couleur de revêtement à partir d'une image de surface de revêtement (60A, 60B) présentant une surface de revêtement, comprenant :

une étape de calcul de réflectance spectrale (S1) consistant à calculer une réflectance spectrale d'une couleur de revêtement métallique à chaque angle prédéterminé d'une plage d'angles d'observation à partir de la réflectance spectrale de la couleur de revêtement métallique qui est mesurée à une pluralité d'angles de réception de lumière ;

une étape de calcul de valeur colorimétrique (S2) consistant à calculer une valeur colorimétrique à chaque angle prédéterminé de la plage d'angles d'observation en fonction de la réflectance spectrale ;

une étape de génération d'histogramme (S3) consistant à mesurer un nombre de pixels à chaque niveau de gris de l'image de surface de revêtement (60A, 60B) et à calculer un rapport du nombre de pixels à chaque niveau de gris par rapport à un nombre total de pixels de correction obtenus en retirant le nombre de pixels correspondant aux niveaux de gris maximum et minimum du nombre total de pixels de mesure ;

une étape de mappage (S4) consistant à associer un angle d'observation (A) à chaque angle prédéterminé de la plage d'angles d'observation à chaque niveau de gris de l'image de surface de revêtement (60A, 60B) ; et

une étape de génération d'image d'évaluation de couleur de revêtement (S5) consistant à générer l'image d'évaluation de couleur de revêtement colorée (70A, 70B, 70C, 70D) en agençant les valeurs colorimétriques calculées à chaque angle prédéterminé de la plage d'angles d'observation dans une séquence en fonction d'un ordre de grandeur des angles d'observation (A) et d'une quantité correspondant au rapport du nombre de pixels pour chaque niveau de gris associé à l'angle d'observation (A) par rapport à un nombre total de pixels de correction obtenu en retirant le nombre de pixels correspondant aux niveaux de gris maximum et minimum du nombre total de pixels de mesure.

2. Procédé de génération d'image d'évaluation de couleur de revêtement selon la revendication 1, dans lequel à l'étape de mappage (S4),

   le niveau de gris le plus élevé est associé à l'angle le plus petit de la plage d'angles d'observation, et
   le niveau de gris le plus bas est associé à l'angle le plus grand de la plage d'angles d'observation.

3. Procédé de génération d'image d'évaluation de couleur de revêtement selon la revendication 1,

   dans lequel l'étape de génération d'image d'évaluation de couleur de revêtement (S5) inclut la génération de l'image d'évaluation de couleur de revêtement (70A, 70B, 70C, 70D) dans une forme bidimensionnelle, et
   dans lequel l'image d'évaluation de couleur de revêtement (70A, 70B, 70C, 70D) est agencée dans une séquence de balayage ligne par ligne dans laquelle les valeurs colorimétriques sont dans une séquence d'un ordre de grandeur d'angles de la plage d'angles d'observation.

4. Programme de génération d'image d'évaluation de couleur de revêtement pour amener un ordinateur (2) à générer une image d'évaluation de couleur de revêtement (70A, 70B, 70C, 70D) à partir d'une image de surface de revêtement (60A, 60B) présentant une surface de revêtement en exécutant le procédé selon l'une des revendications 1 à 3.

5. Dispositif (2) configuré pour générer une image d'évaluation de couleur de revêtement (70A, 70B, 70C, 70D) à partir d'une image de surface de revêtement (60A, 60B) présentant une surface de revêtement, comprenant :

   une unité de calcul de réflectance spectrale (51) configurée pour calculer une réflectance spectrale d'une couleur de revêtement métallique à chaque angle prédéterminé d'une plage d'angles d'observation en fonction de la réflectance spectrale de la couleur de revêtement métallique qui est mesurée à une pluralité d'angles de réception de lumière ;
   une unité de calcul de valeur colorimétrique (52) configurée pour calculer une valeur colorimétrique à chaque angle prédéterminé de la plage d'angles d'observation en fonction de la réflectance spectrale ;
   une unité de génération d'histogramme (53) configurée pour mesurer un nombre de pixels à chaque niveau de gris de l'image de surface de revêtement (60A, 60B) et calculer un rapport du nombre de pixels à chaque niveau de gris par rapport à un nombre total de pixels de correction obtenus en retirant le nombre de pixels correspondant aux niveaux de gris maximum et minimum du nombre total de pixels de mesure ;
   une unité de mappage (54) configurée pour associer un angle d'observation (A) à chaque angle prédéterminé de la plage d'angles d'observation à chaque niveau de gris de l'image de surface de revêtement (60A, 60B) ; et
   une unité de génération d'image d'évaluation de couleur de revêtement (55) configurée pour générer l'image d'évaluation de couleur de revêtement colorée (70A, 70B, 70C, 70D) en agençant les valeurs colorimétriques calculées à chaque angle prédéterminé de la plage d'angles d'observation dans une séquence en fonction d'un ordre de grandeur des angles d'observation (A) et d'une quantité correspondant au rapport du nombre de pixels pour chaque niveau de gris associé à l'angle d'observation (A) par rapport à un nombre total de pixels de correction obtenu en retirant le nombre de pixels correspondant aux niveaux de gris maximum et minimum du nombre total de pixels de mesure.

6. Dispositif (2) configuré pour générer une image d'évaluation de couleur de revêtement (70A, 70B, 70C, 70D) selon la revendication 5, dans lequel l'unité de mappage (54) est configurée pour :

   associer le niveau de gris le plus élevé à l'angle le plus petit de la plage d'angles d'observation, et
   associer le niveau de gris le plus bas à l'angle le plus grand de la plage d'angles d'observation.

7. Dispositif (2) configuré pour générer une image d'évaluation de couleur de revêtement (70A, 70B, 70C, 70D) selon la revendication 5, dans lequel l'unité de génération d'image d'évaluation de couleur de revêtement (55) est configurée pour :

**EP 3 848 682 B1**

générer l'image d'évaluation de couleur de revêtement (70A, 70B, 70C, 70D) dans une forme bidimensionnelle, et

agencer l'image d'évaluation de couleur de revêtement (70A, 70B, 70C, 70D) dans une séquence de balayage ligne par ligne dans laquelle les valeurs colorimétriques sont dans une séquence d'un ordre de grandeur d'angles de la plage d'angles d'observation.

# FIG. 1  100

COMPUTER 2

IMAGE INPUT UNIT 1

IMAGE OUTPUT UNIT 3

# FIG. 2  2

PROCESSOR 20

MEMORY 21

STORAGE UNIT 22

INPUT-OUTPUT CONTROL UNIT 23

# FIG. 3

SPECTRAL REFLECTANCE CALCULATING UNIT 51

COLOR-MEASUREMENT-VALUE CALCULATING UNIT 52

HISTOGRAM CALCULATING UNIT 53

MAPPING UNIT 54

COATING-COLOR-EVALUATION-IMAGE GENERATING UNIT 55

# FIG. 4

# FIG. 5

60A

# FIG. 6

Count: 185328    Min: 9
Mean: 188.778    Max: 255
StdDev: 78.388    Mode: 255 (94923)

# FIG. 7

# FIG. 8

60B

# FIG. 9

Count: 1336960   Min: 20
Mean: 195.648   Max: 255
StdDev: 77.688   Mode: 255 (742521)

# FIG. 10

# FIG. 11

<u>70</u>

0 DEGREES

h

f

75 DEGREES

s

# FIG. 12

<u>70A</u>

T-1D2-AMY

h

f

s

# FIG. 13

70B

T-4S3-AMY

h

f

s

# FIG. 14

70C

T-1D2-AMY

h

f

s

# FIG. 15

70D

T-4S3-AMY

h

f

s

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2018165312 A
- EP 0932038 A1
- WO 2006064011 A1
- JP 6068238 B
- JP 3671088 B
- JP 4790164 B